# FASCICULE DE BREVET EUROPEEN

(11) **EP 4 052 225 B1**
(45) Date de publication et mention de la délivrance du brevet: **13.05.2026**
(21) Numéro de dépôt: 19795543.8
(22) Date de dépôt: 28.10.2019
(51) Int. Cl.: G06T 7/70

(54) **SYSTÈME INFORMATIQUE DE VIDÉOSURVEILLANCE D'AU MOINS UNE ÉTAPE D'UN PARCOURS DE GOLF**
COMPUTERSYSTEM ZUR VIDEOÜBERWACHUNG MINDESTENS EINES ABSCHNITTS EINES GOLFPLATZES
COMPUTER SYSTEM FOR THE VIDEO SURVEILLANCE OF AT LEAST ONE STAGE OF A GOLF COURSE

(43) Date de publication de la demande: 07.09.2022
(73) Titulaire: 18.Events, 31000 Toulouse (FR)
(72) Inventeur: LEMAUF, Benoit, FONTENILLES 31470 (FR); BAQUIER, Matthieu, 31000 TOULOUSE (FR); CHILDES, Jeremy, 31300 TOULOUSE (FR)
(74) Mandataire: BARRE LAFORGUE
(86) Numéro de dépôt international: PCT/EP2019/079429
(87) Numéro de publication internationale: WO 2021/083490

(56) Documents cités:
- WO-A2-2016/127189
- US-A- 5 102 140
- US-A1- 2003 004 005
- US-A1- 2005 026 710
- US-A1- 2005 101 415
- US-A1- 2008 182 685

## Description

### Domaine technique

L'invention concerne un système informatique et un procédé

### Technique antérieure

Le golf est un sport de précision qui compte de plus en plus d'adeptes de tous les âges.

Munis de clubs, les golfeurs et les golfeuses doivent frapper sur une balle de golf pour l'amener dans un trou de golf. Le but de tout joueur est de compléter chaque trou de golf en effectuant le moins de coups possible.

Le trou de golf est précédé d'une aire de départ, d'un fairway et d'un green. C'est sur le green que se trouve le trou de golf à atteindre.

L'un des coups les plus rares au golf est le trou-en-un («hole in one», en anglais), pour lequel la balle atterrit dans le trou de golf d'un seul coup depuis l'aire de départ.

Pour être homologué et pouvoir prétendre à une récompense, le trou-en-un nécessite la présence d'un arbitre officiel qui vérifie, sur le parcours, si les conditions de validation du coup sont réunies. C'est pour cette raison que le trou-en-un est généralement réalisé dans les compétitions officielles de golf qui sont destinées aux professionnels et semi-professionnels.

Il existe donc un besoin de rendre accessible la possibilité de jouer un trou-en-un en dehors des compétitions officielles, et ce, sans nécessiter d'arbitre officiel, tout en permettant d'obtenir une récompense.

Le document US5102140 décrit un système dans lequel un joueur interagit avec une machine actionnée par une pièce de monnaie avant de tenter un trou-en-un et éventuellement gagner une récompense en cas de réussite. Le montant de la récompense correspond aux montants engagés par les précédents joueurs qui ont échoué à réussir un trou-en-un.

Le document WO 2016/127189 A2 décrit un système permettant de surveiller les coups d'un golfeur comprend des mécanismes permettant d'identifier la balle de golf et le golfeur, des écrans vidéo au niveau des zones de lancement et de cible, ainsi qu'un écran de surveillance du trou qui détecte les changements d'état. Les composants optionnels comprennent un moniteur de vol et des dispositifs de chronométrage pour un enregistrement synchronisé. L'identificateur de balle de golf peut détecter les marques existantes ou appliquer des marques uniques, et peut mesurer les propriétés de la balle. Une structure de trou de golf peut abriter une caméra, des capteurs et des modules de communication. La méthode consiste à vérifier l'identité du golfeur et de la balle, à confirmer que les zones de départ et d'arrivée sont prêtes, à enregistrer le coup et la zone d'arrivée pendant des fenêtres de temps définies, et à détecter les changements dans le trou ou la zone d'arrivée.

Par ailleurs, ce système permet d'enregistrer la réalisation du trou-en-un sous la forme d'une vidéo pour permettre à un gestionnaire du golf de vérifier la réussite du trou-en-un.

Bien que ce système permette de se passer d'un arbitre sur le parcours, il nécessite du personnel pour visionner la vidéo montrant la réalisation du trou-en-un. Or, cela prend du temps au personnel de retrouver le bon moment dans la vidéo et vérifier que les conditions de validation du coup sont réunies comme le ferait un arbitre officiel.

### Exposé de l'invention

L'invention vise à pallier cet inconvénient.

Ainsi l'invention propose un système informatique et un procédé de vidéosurveillance d'au moins une étape d'un parcours de golf, qui ne nécessite pas d'arbitre officiel ni de personnel pour visionner la vidéo montrant l'occurrence du trou-en-un et valider le trou-en-un.

Ainsi, l'invention concerne un système informatique de vidéosurveillance d'au moins une étape d'un parcours de golf comprenant au moins un trou de golf et au moins une aire de départ. Le système comprend :
- des moyens vidéo pour produire au moins un signal vidéo qui représente au moins une image continue d'au moins le trou de golf, l'aire de départ et tout ou partie de l'étape 10 de parcours de golf;
- des premier moyens de stockage électronique pour enregistrer le signal vidéo ;
- des moyens de communication de données pour transmettre le signal vidéo à un réseau informatique ;
dans lequel les moyens vidéo, les premier moyens de stockage électronique et les moyens de communication de données sont montés sur un élément de support.

Le système comprend, en outre, des moyens de traitement vidéo, connectés au réseau informatique, pour
- déterminer, à partir du signal vidéo, une position relative du trou de golf par rapport à l'élément de support,
- déterminer, à partir du signal vidéo, une position relative de l'aire de départ, par rapport à l'élément de support,
- détecter, à partir du signal vidéo, au moins une balle de golf jouée sur le l'étape 10 de parcours de golf,
- produire, à partir du signal vidéo, un signal de trajectoire qui représente au moins une trajectoire de mouvement de la balle de golf jouée, et
- détecter l'apparition d'un événement prédéterminé impliquant la balle de golf jouée, à partir du signal de trajectoire, de la position du trou de golf et de la position de l'aire de départ.

Dans une première mise en œuvre particulière, les moyens de traitement vidéo sont, en outre, prévus pour
- produire une pluralité de signaux de trajectoires simulées ou fictives qui représente chacun une trajectoire de mouvement d'une balle de golf simulée ou fictive que l'on aurait jouée depuis l'aire de départ vers le trou de golf;
- comparer le signal de trajectoire avec tout ou partie de la pluralité de signaux de trajectoires simulées ou fictives; et
- détecter l'apparition de l'événement prédéterminé impliquant la balle de golf jouée, à partir, en outre, d'au moins un résultat de la comparaison.

Dans un exemple de la première mise en œuvre particulière, le système comprend en outre un système d'apprentissage automatique préentrainé pour prédire la pluralité de signaux de trajectoires simulées ou fictives, à partir du signal vidéo.

Dans une deuxième mise en œuvre particulière, le système comprend en outre des moyens de créer une limite de jeu qui trace une distance minimale d'une position de départ de la balle de golf avant qu'elle ne soit jouée et/ou au moins une zone de projection sur le sol qui délimite une zone d'une position d'arrivée de la balle de golf après qu'elle soit jouée, les moyens de traitement vidéo étant en outre prévus pour détecter l'apparition de l'événement prédéterminé impliquant la balle de golf jouée, à partir, en outre du signal vidéo.

Dans une troisième mise en œuvre particulière, un châssis porte l'élément de support, le châssis étant monté sur des roues qui permettent le déplacement de l'élément de support sur le sol et qui sont blocables sur le sol.

Dans une quatrième mise en œuvre particulière, l'élément de support est pourvu de moyens de déplacement d'une partie de celui-ci de manière à étendre ou rétracter l'élément de support par rapport au châssis ou au sol.

Dans une cinquième mise en œuvre particulière, le système comprend en outre des moyens de connexion électrique prévus de manière à alimenter au moins les moyens vidéo, les premier moyens de stockage électronique et les moyens de communication de données, au cours d'une connexion des moyens de connexion électrique avec une source d'alimentation électrique externe.

Dans une sixième mise en œuvre particulière, le système comprend en outre des moyens d'alimentation électrique prévus de manière à alimenter au moins les moyens vidéo, les premier moyens de stockage électronique et les moyens de communication de données, les moyens d'alimentation électrique comprenant une batterie.

Dans une septième mise en œuvre particulière, le système comprend en outre un terminal de paiement électronique destiné à être connecté au réseau informatique et prévu pour communiquer avec un moyen de paiement électronique de manière à amener le système de vidéosurveillance à être opérationnel pendant un temps prédéterminé après le paiement d'un montant prédéterminé.

Dans un premier exemple de la septième mise en œuvre particulière, le moyen de paiement électronique est une carte de paiement.

Dans un deuxième exemple de la septième mise en œuvre particulière, le moyen de paiement électronique est un dispositif portable intelligent doté d'une technologie et d'une application de paiement.

L'invention couvre également un procédé de vidéosurveillance d'un parcours de golf comprenant au moins un trou de golf et au moins une aire de départ. Le procédé comprend :
- la production, par des moyens vidéo, d'au moins un signal vidéo qui représente au moins une image continue d'au moins le trou de golf, l'aire de départ et tout ou partie du l'étape 10 de parcours de golf;
- l'enregistrement du signal vidéo par des premier moyens de stockage électronique;
- la transmission du signal vidéo à un réseau informatique par des moyens de communication de données;
- le montage sur un élément de support des moyens vidéo, des premier moyens de stockage électronique et des moyens de communication de données; et
- la fourniture, dans le réseau informatique, de moyens de traitement vidéo,
- la détermination, par les moyens de traitement vidéo, d'une position relative du trou de golf par rapport à l'élément de support, à partir du signal vidéo,
- la détermination, par les moyens de traitement vidéo, d'une position relative de l'aire de départ, par rapport à l'élément de support, à partir du signal vidéo,
- la détection, par les moyens de traitement vidéo, d'au moins une balle de golf jouée sur le l'étape 10 de parcours de golf, à partir du signal vidéo,
- la production, par les moyens de traitement vidéo, d'un signal de trajectoire qui représente au moins une trajectoire de mouvement de la balle de golf jouée, à partir du signal vidéo, et
- la détection, par les moyens de traitement vidéo, de l'apparition d'un événement prédéterminé impliquant la balle de golf jouée, à partir du signal de trajectoire, de la position du trou de golf et de la position de l'aire de départ.

D'autres buts, caractéristiques et avantages de l'invention apparaîtront à la lecture de la description suivante, qui se réfère aux figures annexées qui représentent des modes de réalisation préférentiels de l'invention, et que l'on donne uniquement à titre d'exemples non limitatifs.

### Description sommaire des dessins

La figure 1 représente un système informatique de vidéosurveillance d'au moins une étape d'un parcours de golf, selon l'invention.
La figure 2 représente une mise en œuvre particulière du mât de support de la figure 1.

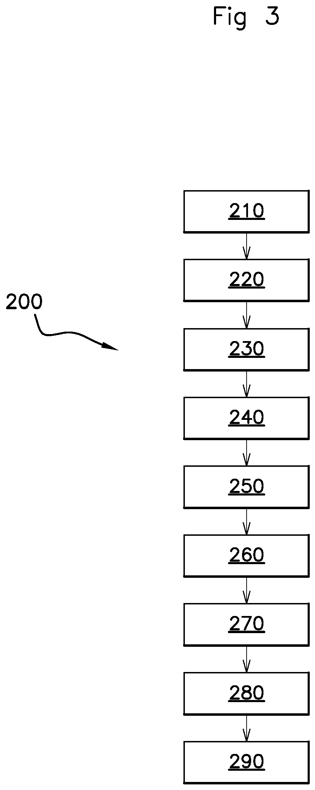

La figure 3 représente un procédé de vidéosurveillance selon l'invention.
Les figures ne respectent pas nécessairement les échelles, notamment en épaisseur, et ce à des fins d'illustration.

### Description des modes de réalisation

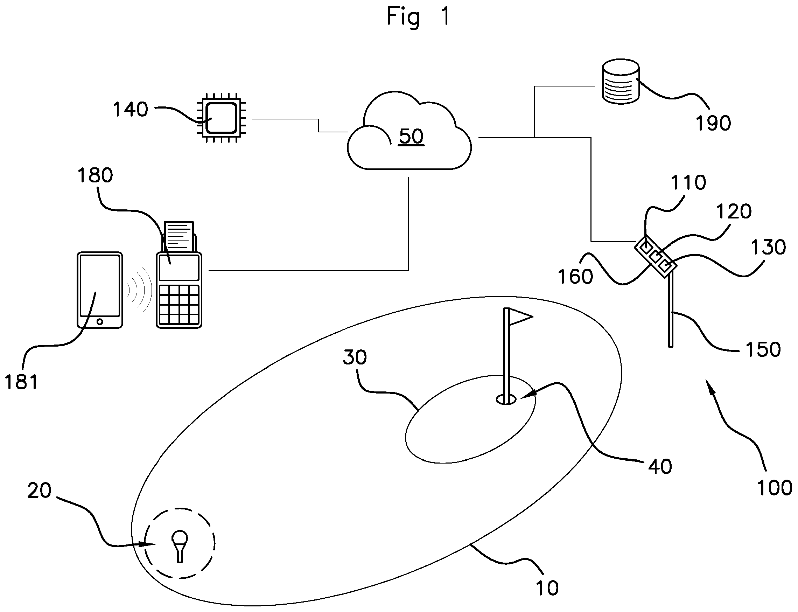

Comme illustré dans la figure 1, le système de vidéosurveillance 100 selon l'invention est destiné à la surveillance d'une étape 10 (également appelé «trou») d'un parcours de golf (« course», en anglais) qui comprend au moins une aire de départ 20 («tee off», en anglais) et au moins une aire d'arrivée 30 qui délimite au moins un trou de golf 40 (« hole », en anglais).

Pour rappel, un parcours de golf comprend généralement dix-huit étapes différentes. Mais l'invention s'applique à d'autres configurations d'un parcours de golf, et ce, sans nécessiter de modifications substantielles.

Dans la figure 1, le système de vidéosurveillance 100 comprend :
- des moyens vidéo 110,
- des premier moyens de stockage électronique 120,
- des moyens de communication de données 130, et
- des moyens de traitement vidéo 140.

Dans l'exemple de la figure 1, un réseau informatique 50 est prévu pour interconnecter les différents éléments du système de vidéosurveillance 100.

Dans la figure 1, les moyens vidéo 110 sont prévus pour produire au moins un signal vidéo qui représente au moins une image continue d'au moins le trou de golf 40, l'aire de départ 20 et tout ou partie de l'étape 10 de parcours de golf.

Dans un exemple, les moyens vidéo 110 comprennent au moins une caméra vidéo fixe qui possède un champ de visée suffisamment large pour couvrir la totalité de l'étape 10 de parcours de golf et au-delà. Par ailleurs, on peut prévoir que la caméra vidéo fixe soit équipée d'un zoom et d'un filtre de stabilisation de l'image.

Dans une mise œuvre particulière de cet exemple, les moyens vidéo 110 comprennent au moins deux caméras vidéo fixes dont l'une est focalisée sur l'aire de départ 20 et l'autre est focalisée sur le trou de golf 40.

Dans une autre mise œuvre particulière de cet exemple, les moyens vidéo 110 comprennent au moins trois caméras vidéo fixes dont l'une est focalisée sur l'aire de départ 20, l'autre est focalisée sur le trou de golf 40 et la dernière couvre la totalité de l'étape 10 de parcours de golf et au-delà.

Dans la figure 1, les premier moyens de stockage électronique 120 sont prévus pour enregistrer le signal vidéo.

Dans un exemple, les premier moyens de stockage électronique 120 sont connus et du type mémoire de masse (disques durs, SSD, disques optiques...) ou du type mémoire statiques (mémoires Flash, PCRAM, FeRAM...).

Dans une mise en œuvre particulière, les premier moyens de stockage électronique 120 sont prévus pour associer le signal vidéo à sa localisation et à une datation. Dans ce cas, le système de vidéosurveillance 100 comprend, en outre, des moyens de localisation du type GPS ou Galileo, et des moyens d'horloge de type connu.

Dans la figure 1, les moyens de communication de données 130 sont prévus pour transmettre le signal vidéo au réseau informatique 50.

Dans un exemple, les moyens de communication de données 130 sont de type sans fil et utilisent au moins un protocole de communication sans fil connu du type wifi, 2G, 3G, 4G, 5G.

Dans un autre exemple, les moyens de communication de données 130 sont de type filaire et utilisent au moins un protocole de communication filaire connu du type Ethernet.

Toujours dans la figure 1, le système de vidéosurveillance 100 comprend un élément de support 150 sur lequel sont montés les moyens vidéo 110, les premier moyens de stockage électronique 120 et les moyens de communication de données 130.

Dans un exemple, l'élément de support 150 est un mât de support.

Dans un autre exemple, l'élément de support 150 est un poteau.

Dans encore un autre exemple, l'élément de support 150 est un mur

Dans encore un autre exemple, l'élément de support 150 est un élément naturel comme un arbre.

Dans ces exemples, l'élément de support 150 possède une hauteur comprise entre 2 m et 3m, de préférence d'environ 2,50 m.

Dans une mise en œuvre particulière, l'élément de support 150 est prévu pour être disposé derrière le l'étape 10 de parcours de golf. Toutefois, l'élément de support 150 peut être disposé ailleurs autour de l'étape 10 de parcours de golf, là où il ne gênera pas le joueur.

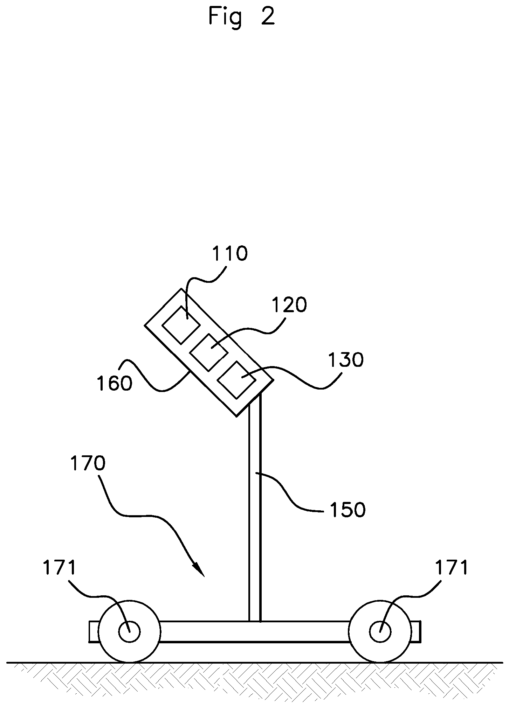

Dans l'exemple des figures 1 et 2, un boitier 160 entoure les moyens vidéo 110, les premier moyens de stockage électronique 120 et les moyens de communication de données 130, lorsqu'ils sont montés sur l'élément de support 150.

De cette manière, le boitier 160 protège des intempéries, les premier moyens de stockage électronique 120 et les moyens de communication de données 130.

Dans un exemple, le boitier 160 est amovible pour permettre le remplacement et/ou la réparation des moyens qu'il entoure.

Dans une mise en œuvre particulière, le boitier 160 est pourvu d'au moins une ouverture (non représentée) qui est agencée pour permettre le passage de tout ou partie du système optique des moyens vidéo 110.

La figure 2 illustre une mise en œuvre particulière du support 150, lorsque l'élément de support 150 est un mât. Dans cette mise en œuvre particulière, un châssis 170 porte le mât support 150. Par ailleurs, le châssis 170 est monté sur des roues 171 qui permettent le déplacement du mât support 150 sur le sol.

Dans une mise en œuvre particulière, les roues 171 sont blocables sur le sol par des moyens de blocage (non représentés) de type connu.

Dans une autre mise en œuvre particulière (non illustrée) du mât support 150, ce dernier est pourvu de moyens connus de déplacement d'une partie de celui-ci de manière à étendre ou rétracter le mât support 150 par rapport au châssis ou au sol.

De cette manière, on peut régler la hauteur du système optique des moyens vidéo 110 pour faire réaliser l'acquisition vidéo souhaitée.

De retour à la figure 1, les moyens de traitement vidéo 140 sont d'abord prévus pour déterminer, à partir du signal vidéo,
- une position relative du trou de golf 40 par rapport à l'élément de support 150, et
- une position relative de l'aire de départ 20, par rapport à l'élément de support 150.

Dans une mise en œuvre particulière, on prédétermine une première distance d'espacement entre l'élément de support 150 et le système optique des moyens vidéo 110. En pratique, la première distance d'espacement prédéterminée est de l'ordre de quelques centimètres et dépend de la disposition des moyens vidéo 110 sur l'élément de support 150.

Ensuite, on prédétermine une deuxième distance d'espacement entre le système optique des moyens vidéo 110 et le sol. En pratique, la deuxième distance d'espacement prédéterminée est de l'ordre de quelques dizaines de centimètres, de préférence entre 1,80 m et 2,20 m et dépend de la disposition des moyens vidéo 110 sur l'élément de support 150.

Enfin, les moyens de traitement vidéo 140 déterminent la position relative du trou de golf 40 et/ou la position relative de l'aire de départ 20, en traitant le signal vidéo avec la première et la deuxième distance d'espacement prédéterminée, de manière à estimer, par exemple par triangularisation, une première mesure de distance entre le système optique des moyens vidéo 110 et le trou de golf 40 et une deuxième mesure de distance entre le système optique des moyens vidéo 110 et l'aire de départ 20.

Dans un exemple de cette première mise en œuvre particulière, les moyens de traitement vidéo 140 estiment la première mesure entre l'élément de support 150 et le centre du trou de golf 40.

Dans un deuxième exemple de cette mise en œuvre particulière, les moyens de traitement vidéo 140 estiment la première mesure entre l'élément de support 150 et une périphérie du trou de golf 40.

Dans un troisième exemple de cette mise en œuvre particulière, les moyens de traitement vidéo 140 estiment la deuxième mesure entre l'élément de support 150 et de l'aire de départ 20.

Dans un quatrième exemple de cette mise en œuvre particulière, les moyens de traitement vidéo 140 estiment la deuxième mesure entre l'élément de support 150 et une périphérie de l'aire de départ 20.

Toujours dans la figure 1, les moyens de traitement vidéo 140 sont ensuite prévus pour détecter, à partir du signal vidéo, au moins une balle de golf jouée sur le l'étape 10 de parcours de golf.

En d'autres termes, les moyens de traitement vidéo 140 peuvent détecter une balle de golf quelconque qui est jouée sur le l'étape 10 de parcours de golf, et ce, que la balle soit jouée depuis l'aire de départ 20 ou non.

De cette manière, on pourra détecter toute erreur ou toute tentative de tricherie, en identifiant les balles de golf qui auraient été jouées depuis l'extérieur de la zone surveillée par le système de vidéosurveillance 100.

Par la suite, les moyens de traitement vidéo 140 sont prévus pour produire, à partir du signal vidéo, un signal de trajectoire qui représente au moins une trajectoire de mouvement de la balle de golf jouée. Pour cela les moyens de traitement vidéo 140 mettent en œuvre des méthodes connues de détection d'objets en mouvement dans une séquence vidéo.

Dans un exemple, la trajectoire de mouvement de la balle de golf jouée est choisie parmi le vol de la balle de golf jouée dans les airs, le roulement de la balle jouée sur le sol, et une combinaison des deux.

Dans une mise en œuvre particulière, le système de vidéosurveillance 100 comprend, en outre, des deuxième moyens de stockage électronique 190 connectés au réseau informatique 50 et qui sont prévus pour enregistrer le signal de trajectoire.

De cette manière, on pourra rejouer ultérieurement, en local ou à distance, la trajectoire de mouvement de la balle de golf jouée, par exemple sur des moyens d'affichage connus de type écran électronique ou film transparent, en étant tactile ou pas.

Enfin, les moyens de traitement vidéo 140 sont prévus pour détecter l'apparition d'un événement prédéterminé impliquant la balle de golf jouée, à partir du signal de trajectoire, de la position du trou de golf 40 et de la position de l'aire de départ 20. Pour cela, comme indiqué plus haut, les moyens de traitement vidéo 140 mettent en œuvre des méthodes connues de détection d'objets en mouvement dans une séquence vidéo.

Dans un exemple, l'événement prédéterminé impliquant la balle de golf jouée peut être l'un des événements suivants :
- la balle de golf jouée est rentrée/n'est pas rentrée dans le trou de golf 40,
- la balle de golf a été jouée/n'a pas été jouée depuis l'aire de départ 20 et est rentrée/n'est pas rentrée dans le trou de golf 40,
- la balle de golf jouée s'est arrêtée à une distance prédéterminée du trou de golf 40.

Dans une mise en œuvre particulière, les moyens de traitement vidéo 140 sont, en outre, prévus pour produire une pluralité de signaux de trajectoires simulées ou fictives qui représentent chacun, indépendamment, une trajectoire de mouvement d'une balle de golf simulée ou fictive que l'on aurait jouée depuis l'aire de départ 20 vers le trou de golf 40.

Dans un exemple, les moyens de traitement vidéo 140 calculent un nombre prédéterminé de trajectoires possibles de mouvement d'une balle de golf simulée ou fictive. De préférence, les moyens de traitement vidéo 140 prennent en considération le relief du terrain d'au moins l'étape 10 de parcours de golf et de ses environs. On pourra utiliser, par exemple, des fichiers numériques de modélisation du relief du terrain d'au moins l'étape 10 de parcours de golf et de ses les trajectoires possibles de mouvement d'une balle de golf simulée ou fictive en fonction du relief du terrain et d'éventuels éléments naturels comme un arbre ou une butte.

Dans un autre exemple, les moyens de traitement vidéo 140 comprennent en outre un système d'apprentissage automatique (non représenté) préentrainé pour prédire la pluralité de signaux de trajectoires simulées ou fictives, à partir du signal vidéo. Pour cela, on peut entrainer le système d'apprentissage automatique à partir de signaux vidéos d'entrainement qui comprennent des images de trajectoires réelles de mouvement d'une balle de golf jouée sur une pluralité d'étapes 10 de parcours de golf.

Dans cette mise en œuvre particulière, les moyens de traitement vidéo 140 sont, en outre, prévus pour comparer le signal de trajectoire avec tout ou partie de la pluralité de signaux de trajectoires simulées ou fictives.

Enfin, dans cette mise en œuvre particulière, les moyens de traitement vidéo 140 sont, en outre, prévus pour détecter l'apparition de l'événement prédéterminé impliquant la balle de golf jouée, à partir, en outre, d'au moins un résultat de la comparaison.

Dans une autre mise en œuvre particulière, le système de vidéosurveillance 100 comprend, en outre, des moyens de créer une limite de jeu qui trace une distance minimale d'une position de départ de la balle de golf avant qu'elle ne soit jouée et/ou au moins une zone de projection sur le sol qui délimite une zone d'une position d'arrivée de la balle de golf après qu'elle soit jouée. Dans ce cas, les moyens de traitement vidéo sont en outre prévus pour détecter l'apparition de l'événement prédéterminé impliquant la balle de golf jouée, à partir, en outre du signal vidéo.

Dans un exemple, un émetteur (non représenté) de lumière visible forme les moyens de créer une limite de jeu. De préférence, la lumière émise par l'émetteur de lumière visible est une lumière laser qui décrit un faisceau lumineux qui trace au moins une ligne de projection sur le sol qui marque la distance minimale d'une position de départ de la balle de golf avant qu'elle ne soit jouée et/ou la zone de projection sur le sol qui délimite une zone d'une position d'arrivée de la balle de golf après qu'elle soit jouée.

Dans encore une autre mise en œuvre particulière, le système de vidéosurveillance 100 comprend, en outre, un terminal de paiement électronique 180 destiné à être connecté au réseau informatique 50 et prévu pour communiquer avec un moyen de paiement électronique 181 de manière à amener le système de vidéosurveillance 100 à être opérationnel pendant un temps prédéterminé après le paiement d'un montant prédéterminé.

Dans un exemple de cette encore une autre mise en œuvre particulière, le moyen de paiement électronique 181 est une carte de paiement du type sans contact ou pas.

Dans un autre exemple de cette encore une autre mise en œuvre particulière, le moyen de paiement électronique 181 est un dispositif portable intelligent doté d'une technologie et d'une application de paiement. Dans cet exemple, l'application de paiement est configurée pour activer le paiement en réponse à une interaction du dispositif portable intelligent avec une image, par exemple du type code barre ou QR code. Par ailleurs, l'application de paiement peut également être configurée pour activer le paiement en réponse à l'établissement d'une communication proche ou à courte portée, par exemple du type NFC, RFID ou Bluetooth.

Dans encore une autre mise en œuvre particulière, le système de vidéosurveillance 100 comprend, en outre, des moyens de connexion électrique (non représentés) prévus de manière à alimenter au moins les moyens vidéo 110, les premier moyens de stockage électronique 120 et les moyens de communication de données 130, au cours d'une connexion des moyens de connexion électrique avec une source d'alimentation électrique externe.

Dans un exemple, la source d'alimentation électrique externe est un panneau photovoltaïque. De cette manière, le système est autonome électriquement.

Dans encore une autre mise en œuvre particulière, le système de vidéosurveillance 100 comprend, en outre, des moyens d'alimentation électrique (non représentés) prévus de manière à alimenter au moins les moyens vidéo 110, les premier moyens de stockage électronique 120 et les moyens de communication de données 130, les moyens d'alimentation électrique comprenant une batterie.

L'invention couvre également un procédé 200 de vidéosurveillance de l'étape 10 de parcours de golf.

la production, par les moyens vidéo 110, d'au moins un signal vidéo qui représente au moins une image continue d'au moins le trou de golf 40, l'aire de départ 20 et tout ou partie de l'étape 10 de parcours de golf.

L'étape 220 comprend, comme expliqué plus haut, l'enregistrement du signal vidéo par les premier moyens de stockage électronique 120.

L'étape 230 comprend, comme expliqué plus haut, la transmission du signal vidéo au réseau informatique 50 par les moyens de communication de données 130.

L'étape 240 comprend, comme expliqué plus haut, le montage sur l'élément de support 150, des moyens vidéo 110, des premier moyens de stockage électronique 120 et des moyens de communication de données 130.

L'étape 250 comprend, comme expliqué plus haut, la fourniture, dans le réseau informatique 50, des moyens de traitement vidéo 140.

L'étape 260 comprend, comme expliqué plus haut, la détermination, par les moyens de traitement vidéo 140, d'une position relative du trou de golf 40 par rapport à l'élément de support 150, à partir du signal vidéo. Cette étape comprend aussi la détermination, par les moyens de traitement vidéo 140, d'une position relative de l'aire de départ 20, par rapport à l'élément de support 150, à partir du signal vidéo.

L'étape 270 comprend, comme expliqué plus haut, la détection, par les moyens de traitement vidéo 140, d'au moins une balle de golf jouée sur le l'étape 10 de parcours de golf, à partir du signal vidéo.

L'étape 280 comprend, comme expliqué plus haut, la production, par les moyens de traitement vidéo 140, d'un signal de trajectoire qui représente au moins une trajectoire de mouvement de la balle de golf jouée, à partir du signal vidéo.

Enfin, l'étape 290 comprend, comme expliqué plus haut, la détection, par les moyens de traitement vidéo 140, de l'apparition d'un événement prédéterminé impliquant la balle de golf jouée, à partir du signal de trajectoire, de la position du trou de golf 40 et de la position de l'aire de départ 20.

## Revendications

1. Système informatique de vidéosurveillance (100) d'au moins une étape (10) d'un parcours de golf comprenant au moins un trou de golf (40) et au moins une aire de départ (20), le système comprenant :
• des moyens vidéo (110) pour produire au moins un signal vidéo qui représente au moins une image continue d'au moins le trou de golf, l'aire de départ et tout ou partie de l'étape (10) de parcours de golf;
• des premier moyens de stockage électronique (120) pour enregistrer le signal vidéo ;
• des moyens de communication de données (130) pour transmettre le signal vidéo à un réseau informatique (50);
dans lequel les moyens vidéo, les premier moyens de stockage électronique et les moyens de communication de données sont montés sur un élément de support (150),
le système comprenant, en outre,
• des moyens de traitement vidéo (140), connectés au réseau informatique, pour
- déterminer, à partir du signal vidéo, une position relative du trou de golf par rapport à l'élément de support,
- déterminer, à partir du signal vidéo, une position relative de l'aire de départ, par rapport à l'élément de support,
- détecter, à partir du signal vidéo, au moins une balle de golf jouée sur le l'étape (10) de parcours de golf,
- produire, à partir du signal vidéo, un signal de trajectoire qui représente au moins une trajectoire de mouvement de la balle de golf jouée, et
- détecter l'apparition d'un événement prédéterminé impliquant la balle de golf jouée, à partir du signal de trajectoire, de la position du trou de golf et de la position de l'aire de départ.

2. Système selon la revendication 1, dans lequel les moyens de traitement vidéo sont, en outre, prévus pour
• produire une pluralité de signaux de trajectoires simulées ou fictives qui représente chacun une trajectoire de mouvement d'une balle de golf simulée ou fictive que l'on aurait jouée depuis l'aire de départ vers le trou de golf;
• comparer le signal de trajectoire avec tout ou partie de la pluralité de signaux de trajectoires simulées ou fictives ; et
• détecter l'apparition de l'événement prédéterminé impliquant la balle de golf jouée, à partir, en outre, d'au moins un résultat de la comparaison.

3. Système selon la revendication 2, comprenant en outre un système d'apprentissage automatique préentrainé pour prédire la pluralité de signaux de trajectoires simulées ou fictives, à partir du signal vidéo.

4. Système selon l'une des revendications 1 à 3, comprenant en outre des moyens de créer une limite de jeu qui trace une distance minimale d'une position de départ de la balle de golf avant qu'elle ne soit jouée et/ou au moins une zone de projection sur le sol qui délimite une zone d'une position d'arrivée de la balle de golf après qu'elle soit jouée, les moyens de traitement vidéo étant en outre prévus pour détecter l'apparition de l'événement prédéterminé impliquant la balle de golf jouée, à partir, en outre du signal vidéo.

5. Système selon l'une des revendications 1 à 4, dans lequel un châssis (170) porte l'élément de support, le châssis de l'élément de support sur le sol et qui sont blocables sur le sol.

6. Système de vidéosurveillance selon l'une des revendications 1 à 5, dans lequel l'élément de support est pourvu de moyens de déplacement d'une partie de celui-ci de manière à étendre ou rétracter l'élément de support par rapport au châssis ou au sol.

7. Système selon l'une des revendications 1 à 6, comprenant, en outre, des moyens de connexion électrique prévus de manière à alimenter au moins les moyens vidéo, les premier moyens de stockage électronique et les moyens de communication de données, au cours d'une connexion des moyens de connexion électrique avec une source d'alimentation électrique externe.

8. Système selon l'une des revendications 1 à 7, comprenant, en outre, des moyens d'alimentation électrique prévus de manière à alimenter au moins les moyens vidéo, les premier moyens de stockage électronique et les moyens de communication de données, les moyens d'alimentation électrique comprenant une batterie.

9. Système selon l'une des revendications 1 à 8, comprenant, en outre, un terminal de paiement électronique (180) destiné à être connecté au réseau informatique et prévu pour communiquer avec un moyen de paiement électronique (181) de manière à amener le système de vidéosurveillance à être opérationnel pendant un temps prédéterminé après le paiement d'un montant prédéterminé.

10. Système de vidéosurveillance selon la revendication 9, dans lequel le moyen de paiement électronique est une carte de paiement.

11. Système de vidéosurveillance selon la revendication 9, dans lequel le moyen de paiement électronique est un dispositif portable intelligent doté d'une technologie et d'une application de paiement.

12. Procédé (200) de vidéosurveillance d'un parcours de golf comprenant au moins un trou de golf et au moins une aire de départ (20), le procédé comprenant :
• la production (210), par des moyens vidéo, d'au moins un signal vidéo qui représente au moins une image continue d'au moins le trou de golf, l'aire de départ et tout ou partie du l'étape (10) de parcours de golf;
• l'enregistrement (220) du signal vidéo par des premier moyens de stockage électronique;
• la transmission (230) du signal vidéo à un réseau informatique par des moyens de communication de données;
• le montage (240) sur un élément de support des moyens vidéo, des premier moyens de stockage électronique et des moyens de communication de données; et
• la fourniture (250), dans le réseau informatique, de moyens de traitement vidéo,
• la détermination (260), par les moyens de traitement vidéo, d'une position relative du trou de golf par rapport à l'élément de support, à partir du signal vidéo,
• la détermination (260), par les moyens de traitement vidéo, d'une position relative de l'aire de départ, par rapport à l'élément de support, à partir du signal vidéo,
• la détection (270), par les moyens de traitement vidéo, d'au moins une balle de golf jouée sur le l'étape (10) de parcours de golf, à partir du signal vidéo,
• la production (280), par les moyens de traitement vidéo, d'un signal de trajectoire qui représente au moins une trajectoire de mouvement de la balle de golf jouée, à partir du signal vidéo, et
• la détection (290), par les moyens de traitement vidéo, de l'apparition d'un événement prédéterminé impliquant la balle de golf jouée, à partir du signal de trajectoire, de la position du trou de golf et de la position de l'aire de départ.

## Patentansprüche

1. Computersystem (100) zur Videoüberwachung mindestens einer Etappe (10) eines Golfplatzes, die mindestens ein Golfloch (40) und mindestens einen Abschlagbereich (20) umfasst, wobei das System umfasst:
• Videoeinrichtungen (110), um mindestens ein Videosignal zu erzeugen, das mindestens ein durchgehendes Bild mindestens des Golflochs, des Abschlagbereichs und der gesamten oder eines Teils der Etappe (10) des Golfplatzes darstellt;
• erste Einrichtungen (120) zur elektronischen Speicherung, um das Videosignal aufzuzeichnen;
• Datenkommunikationseinrichtungen (130), um das Videosignal an ein Computernetzwerk (50) zu übertragen; wobei die Videoeinrichtungen, die ersten Einrichtungen zur elektronischen Speicherung und die Datenkommunikationseinrichtungen an einem Trägerelement (150) montiert sind,
wobei das System ferner umfasst:
• Videoverarbeitungseinrichtungen (140), die mit dem Computernetzwerk verbunden sind, um
- ausgehend von dem Videosignal eine relative Position des Golflochs in Bezug auf das Trägerelement zu bestimmen,
- ausgehend von dem Videosignal eine relative Position des Abschlagbereichs in Bezug auf das Trägerelement zu bestimmen,
- ausgehend von dem Videosignal mindestens einen auf der Etappe (10) des Golfplatzes gespielten Golfball zu detektieren,
- ausgehend von dem Videosignal ein Trajektoriensignal zu erzeugen, das mindestens eine Bewegungstrajektorie des gespielten Golfballs darstellt, und
- das Eintreten eines vorbestimmten Ereignisses, das den gespielten Golfball beinhaltet, ausgehend von dem Trajektoriensignal, der Position des Golflochs und der Position des Abschlagbereichs zu detektieren.

2. System nach Anspruch 1, wobei die Videoverarbeitungseinrichtungen ferner dazu vorgesehen sind,
• eine Vielzahl von simulierten oder fiktiven Trajektoriensignalen zu erzeugen, die jeweils eine Bewegungstrajektorie eines simulierten oder fiktiven Golfballs darstellen, den man von dem Abschlagbereich aus zu dem Golfloch gespielt hätte;
• das Trajektoriensignal mit allen oder einem Teil der Vielzahl von simuliertem oder fiktiven Trajektoriensignalen zu vergleichen; und
• das Auftreten des vorbestimmten Ereignisses, das den gespielten Golfball beinhaltet, ferner ausgehend von mindestens einem Ergebnis des Vergleichs zu detektieren.

3. System nach Anspruch 2, umfassend ferner ein vortrainiertes Maschinenlernsystem, um die Vielzahl von simulierten oder fiktiven Trajektoriensignalen ausgehend von dem Videosignal vorherzusagen.

4. System nach einem der Ansprüche 1 bis 3, umfassend ferner Einrichtungen zum Erstellen einer Spielgrenze, die einen Mindestabstand von einer Abschlagposition eines Golfballs zeichnet, bevor er gespielt wird, und/oder mindestens eine Projektionszone auf dem Boden, die eine Zone einer Auftreffposition des Golfballs begrenzt, nachdem er gespielt wurde, wobei die Videoverarbeitungseinrichtungen ferner dazu vorgesehen sind, das Auftreten eines vorbestimmten Ereignisses, das den gespielten Golfball beinhaltet, ferner ausgehend von dem Videosignal zu detektieren.

5. System nach einem der Ansprüche 1 bis 4, wobei ein Gestell (170) die Trägerelement trägt, das Gestell des Trägerelements auf dem Boden und die auf dem Boden feststellbar sind.

6. Videoüberwachungssystem nach einem der Ansprüche 1 bis 5, wobei das Trägerelement mit Einrichtungen zum Bewegen eines Teils davon versehen ist, so dass das Trägerelement in Bezug auf das Gestell oder den Boden ausgefahren oder eingefahren wird.

7. System nach einem der Ansprüche 1 bis 6, umfassend ferner Einrichtungen zur elektrischen Verbindung, die so ausgelegt sind, dass sie mindestens die Videoeinrichtungen, die ersten Einrichtungen zur elektronischen Speicherung und die Datenkommunikationseinrichtungen bei einer Verbindung der Einrichtungen zur elektrischen Verbindung mit einer externen elektrischen Versorgungsquelle versorgen.

8. System nach einem der Ansprüche 1 bis 7, umfassend ferner Einrichtungen zur elektrischen Versorgung, die so ausgelegt sind, dass sie mindestens die Videoeinrichtungen, die ersten Einrichtungen zur elektronischen Speicherung und die Datenkommunikationseinrichtungen versorgen, wobei die Einrichtungen zur elektrischen Versorgung eine Batterie umfassen.

9. System nach einem der Ansprüche 1 bis 8, umfassend ferner ein elektronisches Zahlungsterminal (180), das dazu bestimmt ist, mit dem Computernetzwerk verbunden zu werden und dazu ausgelegt ist, mit einer elektronischen Zahlungseinrichtung (181) zu kommunizieren, so dass das Videoüberwachungssystem dazu gebracht wird, während einer vorbestimmten Zeit nach der Zahlung eines vorbestimmten Betrags betriebsbereit zu sein.

10. Videoüberwachungssystem nach Anspruch 9, wobei die die elektronische Zahlungseinrichtung eine Zahlungskarte ist.

11. Videoüberwachungssystem nach Anspruch 9, wobei die elektronische Zahlungseinrichtung ein intelligentes tragbares Gerät ist, das mit einer Zahlungstechnologie und -anwendung ausgestattet ist.

12. Verfahren (200) zur Videoüberwachung eines Golfplatzes, der mindestens ein Golfloch und mindestens einen Abschlagbereich (20) umfasst, das Verfahren umfassend:
• das Erzeugen (210), durch Videoeinrichtungen, mindestens eines Videosignals, das mindestens ein durchgehendes Bild mindestens des Golflochs, des Abschlagbereichs und der gesamten oder eines Teils der Etappe (10) des Golfplatzes darstellt;
• das Aufzeichnen (220) des Videosignals durch erste Einrichtungen zur elektronischen Speicherung;
• das Übertragen (230) des Videosignals an ein Computernetzwerk durch Datenkommunikationseinrichtungen;
• das Anbringen (240) der Videoeinrichtungen, der ersten Einrichtungen zur elektronischen Speicherung und der Datenkommunikationseinrichtungen an einem Trägerelement; und
• das Bereitstellen von Videoverarbeitungseinrichtungen (250) in dem Computernetzwerk,
• das Bestimmen (260), durch die Videoverarbeitungseinrichtungen, einer relativen Position des Golflochs in Bezug auf das Trägerelement ausgehend von dem Videosignal;
• das Bestimmen (260), durch die Videoverarbeitungseinrichtungen, einer relativen Position des Abschlagbereichs in Bezug auf das Trägerelement ausgehend von dem Videosignal;
• das Detektieren (270), durch die Videoverarbeitungseinrichtungen, mindestens eines auf der Etappe (10) des Golfplatzes gespielten Golfballs ausgehend von dem Videosignal,
• das Erzeugen (280), durch die Videoverarbeitungseinrichtungen, eines Trajektoriensignals, das mindestens eine Bewegungstrajektorie des gespielten Golfballs darstellt, ausgehend von dem Videosignal, und
- das Detektieren (290), durch die Videoverarbeitungseinrichtungen, des Eintretens eines vorbestimmten Ereignisses, das den gespielten Golfball beinhaltet, ausgehend von dem Trajektoriensignal, der Position des Golflochs und der Position des Abschlagbereichs.

## Claims

1. A computer system for the video surveillance (100) of at least one step (10) of a golf course comprising at least one golf hole (40) and at least one teeing area (20), the system comprising:
• video means (110) for producing at least one video signal which represents at least one continuous image of at least the golf hole, the teeing area and all or part of the golf course step (10);
• first electronic storage means (120) for recording the video signal;
• data communication means (130) for transmitting the video signal to a computer network (50);
wherein the video means, the first electronic storage means and the data communication means are mounted on a support element (150),
the system further comprising
• video processing means (140), connected to the computer network, for
- determining, based on the video signal, a relative position of the golf hole with respect to the support element,
- determining, based on the video signal, a relative position of the teeing area with respect to the support element,
- detecting, based on the video signal, at least one golf ball played on the golf course step (10),
- producing, based on the video signal, a trajectory signal which represents at least one trajectory of motion of the played golf ball, and
- detecting the occurrence of a predetermined event involving the played golf ball based on the trajectory signal, the position of the golf hole and the position of the teeing area.

2. The system as claimed in claim 1, wherein the video processing means are further provided to
• provide a plurality of simulated or dummy trajectory signals which each represent a trajectory of motion of a simulated or dummy golf ball that would have been played from the teeing area to the golf hole;
• compare the trajectory signal with all or some of the plurality of simulated or dummy trajectory signals; and
• detect the occurrence of the predetermined event involving the played golf ball based, in addition, on at least one result of the comparison.

3. The system as claimed in claim 2, further comprising a pre-trained machine learning system for predicting the plurality of simulated or dummy trajectory signals based on the video signal.

4. The system as claimed in one of claims 1 to 3, further comprising means for creating a play limit which traces a minimum distance from a teeing position of the golf ball before it is played and/or at least one region projected on the ground which delimits a region of an arrival position of the golf ball after it has been played, the video processing means being further provided to detect the occurrence of the predetermined event involving the played golf ball based, in addition, on the video signal.

5. The system as claimed in one of claims 1 to 4, in which a chassis (170) bears the support element, the chassis being mounted on wheels which allow the support element to be moved over the ground and which are lockable on the ground.

6. The video surveillance system as claimed in one of claims 1 to 5, wherein the support element is provided with means for moving a portion thereof so as to extend or retract the support element with respect to the chassis or to the ground.

7. The system as claimed in one of claims 1 to 6, further comprising electrical connection means provided so as to supply at least the video means, the first electronic storage means and the data communication means with power when the electrical connection means are connected to an external electrical power source.

8. The system as claimed in one of claims 1 to 7, further comprising electrical power supply means provided so as to supply at least the video means, the first electronic storage means and the data communication means with power, the electrical power supply means comprising a battery.

9. The system as claimed in one of claims 1 to 8, further comprising an electronic payment terminal (180) which is intended to be connected to the computer network and is provided to communicate with an electronic payment means (181) so as to cause the video surveillance system to be operational for a predetermined time after the payment of a predetermined amount.

10. The video surveillance system as claimed in claim 9, wherein the electronic payment means is a payment card.

11. The video surveillance system as claimed in claim 9, wherein the electronic payment means is a smart wearable device equipped with technology and an application for payment.

12. A method (200) for the video surveillance of a golf course comprising at least one golf hole and at least one teeing area (20), the method comprising:
• video means producing (210) at least one video signal which represents at least one continuous image of at least the golf hole, the teeing area and all or part of the golf course step (10);
• first electronic storage means recording (220) the video signal;
• data communication means transmitting (230) the video signal to a computer network;
• mounting (240) the video means, the first electronic storage means and the data communication means on a support element; and
• providing (250), in the computer network, video processing means,
• the video processing means determining (260) a relative position of the golf hole with respect to the support element based on the video signal,
• the video processing means determining (260) a relative position of the teeing area with respect to the support element based on the video signal,
• the video processing means detecting (270) at least one golf ball played on the golf course step (10) based on the video signal,
• the video processing means producing (280) a trajectory signal which represents at least one trajectory of motion of the played golf ball based on the video signal, and
• the video processing means detecting (290) the occurrence of a predetermined event involving the played golf ball based on the trajectory signal, the position of the golf hole and the position of the teeing area.
